# EUROPEAN PATENT SPECIFICATION

(11) **EP 1 514 626 B1**
(45) Date of publication and mention of the grant of the patent: **05.11.2008**
(21) Application number: 04020756.5
(22) Date of filing: 01.09.2004
(51) Int. Cl.: B23D 49/16

(54) **Shoe assembly for power tool and power tool incorporating such assembly**
Fussplattenvorrichtung für ein Kraftwerkzeug und ein Kraftwerkzeug mit einer solchen Vorrichtung
Ensemble de guidage pour un outil motorisé et un outil motorisé comprenant un tel ensemble

(30) Priority: 29.06.2004 GB 0414465; 09.09.2003 GB 0320998
(43) Date of publication of application: 16.03.2005
(73) Proprietor: Black & Decker Inc., Newark, Delaware 19711 (US)
(72) Inventor: Walmsley, Neil, Ferryhill County Durham DL17 8BQ (GB)
(74) Representative: Bell, Ian Stephen

(56) References cited:
- US-A- 5 012 583
- US-A- 5 452 515
- US-B1- 6 357 124
- PATENT ABSTRACTS OF JAPAN vol. 2000, no. 05, 14 September 2000 (2000-09-14) -& JP 2000 037701 A (HITACHI KOKI CO LTD), 8 February 2000 (2000-02-08)
- PATENT ABSTRACTS OF JAPAN vol. 1995, no. 06, 31 July 1995 (1995-07-31) -& JP 07 060538 A (MAKITA CORP), 7 March 1995 (1995-03-07)

## Description

The present invention relates to a shoe assembly for a power tool according to the preamble of claim 1 and relates particularly but not exclusively, to a shoe assembly for a jigsaw. The invention also relates to a reciprocating tool incorporating such an assembly.

Jigsaws are power tools housing a motor for reciprocatingly driving a blade. The housing generally rests on a shoe assembly for supporting the saw on a workpiece, and the blade projects through the shoe in order to cut the workpiece. Jigsaws can also be equipped to perform bevel cutting, in which the blade is tilted about the longitudinal axis of the shoe in order to produce angular cuts in the workpiece.

Bevel cutting jigsaws are known which have preset angular inclinations, and mechanisms for locking the blade at an angle to the workpiece. US6357124 describes a clamping mechanism for a bevel-cutting jigsaw in which deflectable ball bearings are held on the underside of a housing of the jigsaw in order to resiliently engage indentations formed on the upper surface of a shoe of the jigsaw. There are several indentations formed at predetermined angles, so that as the housing is pivoted about the shoe, the ball bearings move resiliently in and out of the indentations. A locking mechanism is also provided to clamp the housing and shoe at a selected angle relative to each other.

This prior art bevel-cutting jigsaw suffers from the drawback that the ball bearings push the shoe away from the housing, making the pivoting movement of the shoe jerky and awkward.

US5452515 describes a hand circular saw having a motor housing, a circular rotary saw blade, a base plate and a clamping block. The saw blade can pivot relative to the base plate. The base plate carries a clamping block with a turning guide slot. The clamping block is disposed on a side of the housing. A clamping screw extends through a turning arm and the turning guide slot is selectively locked to the clamping block by turning a wing nut to move the clamping screw. In order to pivot the saw blade relative to the base plate, the wing nut is loosened and the clamping block is released. This enables the turning arm to pivot relative to the base plate. Five arresting pockets are formed in the turning guide slot into which the clamping screw can engage to select the angle of the saw blade relative to the base plate.

The present invention seeks to overcome the above disadvantage of the prior art.

According to the present invention, there is provided a shoe assembly for a power tool having a housing, at least one working member for engaging a workpiece, and a motor for causing movement of the or each said working member relative to the housing, the shoe assembly comprising the features of claim 1.

By providing a shoe portion with a plurality of recesses provided on a surface facing away from the housing of the tool in use and facing the workpiece in use when the underside of the shoe assembly is parallel with said workpiece, engaging at least one resiliently displaceable projection, this provides the advantage of making the pivoting movement of the shoe smoother, and less awkward for the user, than in prior art devices.

In a preferred embodiment, at least one said resiliently displaceable projection comprises a respective spring-loaded ball bearing.

This provides the advantage that the ball bearing slides easily in and out of engagement with the respective recesses as pressure is applied to the shoe.

In a preferred embodiment, the mounting portion further comprises at least one clamp plate for supporting a respective said spring-loaded ball bearing, at least one said clamp plate having a respective arcuate upper surface adapted to slidably engage the shoe portion such that at least one corresponding said ball bearing can selectively resiliently engage each of the plurality of said recesses of the shoe portion in response to a user pivoting said housing relative to said shoe member.

This provides the advantage of increasing the strength of the link between the shoe and the housing.

The assembly may further comprise first locking means adapted to lock said shoe portion in a predetermined orientation relative to the mounting portion.

This provides the advantage of preventing unwanted pivoting of the shoe, and increasing the safety of the assembly.

In a preferred embodiment, said first locking means comprises at least one first bolt adapted to lock at least one said clamp plate to the shoe portion.

In a preferred embodiment, rotation of at least one said first bolt in a first sense causes at least one corresponding said clamp plate to disengage from the surface of said shoe potion, and rotation in the opposite sense causes at least one corresponding said clamp plate to engage the surface of said shoe portion in order to lock the clamp plate to the shoe portion.

The first locking means may further comprise at least one nut rotatably mounted to said housing and adapted to receive at least one respective said first bolt.

In a preferred embodiment, at least one said nut comprises a respective lever for rotation of said nut relative to said housing.

This provides the advantage of providing easy rotation of the nut for the user.

In a preferred embodiment the assembly further comprises second locking means adapted to prevent rotation of at least one said first bolt relative to a said clamp plate engaged by said bolt.

This provides the advantage of locking the nut lever in place, such that the user accidentally moving the lever cannot loosen the shoe assembly.

Said second locking means may comprise at least one second bolt and at least one washer, at least one said second bolt received in at least one said clamp plate such that in a first position, at least one said washer abuts a said first bolt and prevents rotation of said first bolt, and such that in a second position rotation of the first bolt is permitted.

According to another aspect of the present invention, there is provided a reciprocating tool having a body, a rotary output shaft, a reciprocating member for causing a working member to execute reciprocating motion in response to rotation of said rotary output shaft, and a shoe assembly as defined above.

In a preferred embodiment, the tool further comprises dust extraction means adapted to remove dust produced by the action of said working member on a workpiece.

This provides the advantage removing dust from the vicinity of the tool and the user.

Said dust extraction means may comprise a tube projecting from said shoe portion adapted to be connected to a source of suction.

In a preferred embodiment, said reciprocating tool is a jigsaw.

A preferred embodiment of the present invention will now be described, by way of example only and not in any limitative sense, with reference to the accompanying drawings, in which:-
Figure 1 is a side view of a jigsaw embodying the present invention;
Figure 2 is an exploded perspective view from the front and one side of a shoe assembly of the jigsaw of Figure 1;
Figure 3 is an exploded side perspective view of the shoe assembly of Figure 2;
Figure 4 is a cross sectional view from the side of part of the jigsaw of Figure 1;
Figure 5 is a cross sectional view of the ball bearing and ball bearing housing of the show assembly of Figure 2;
Figure 6 is a perspective view from below of the shoe cast of the assembly of Figure 2; and
Figure 7 is a perspective view from below of the shoe cast of Figure 6 incorporating a guard rail.

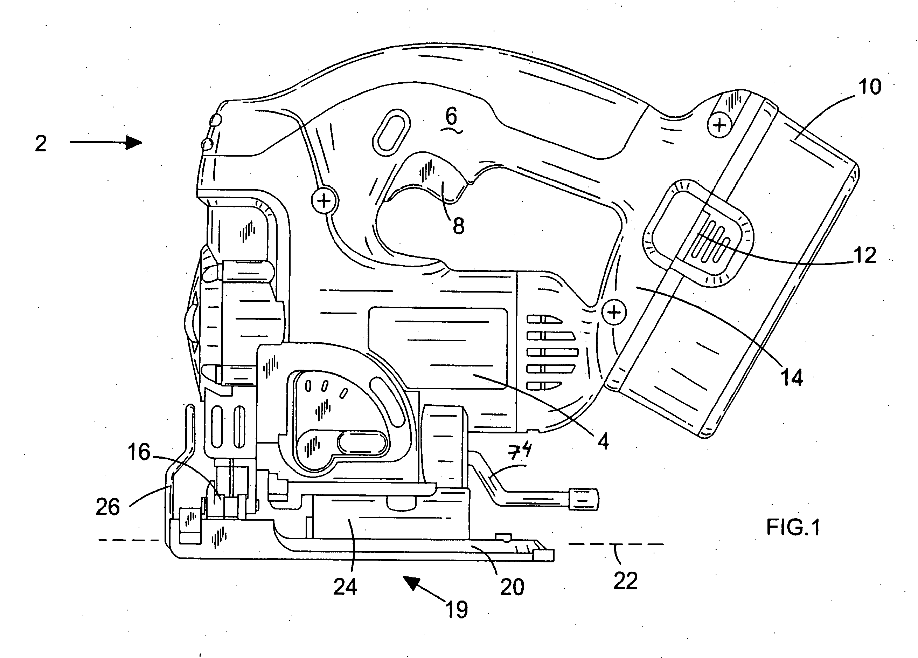

Referring to Figure 1, a jigsaw 2 comprises a housing 4 formed from moulded plastics material in two clamshell halves (not shown) as will be familiar to persons skilled in the art. A handle 6 is integrally formed with the housing 4 to allow a user to grip the jigsaw 2 and depress switch 8 to activate a motor (not shown) of the jigsaw 2. A removable and rechargeable battery pack 10 is shown mounted to the housing 4. The battery pack 10 is removed from the housing 4 by depressing resilient clips 12, and the action of pushing the battery pack 10 back into rear portion 14 of the housing 4 displaces resilient clips 12 such that the battery pack 10 locks in place on the rear of housing 4.

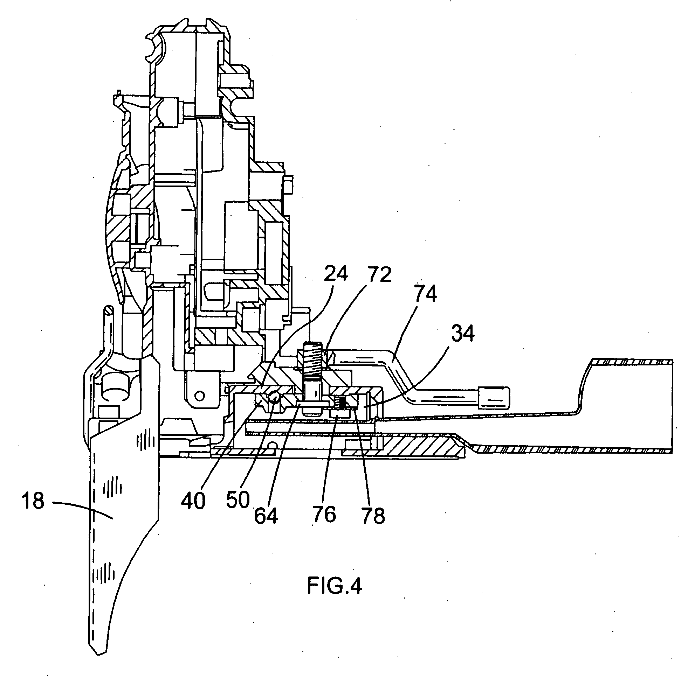

A blade clamp 16 releasably holds a jigsaw blade (not shown), and executes reciprocating vertical movement when the jigsaw motor is activated. The blades may be of the standard type, or of the flush-cut type as shown in Figure 4 and which extend further forwards than standard blades, for example to enable a cut to be made close to a surface such as a wall.

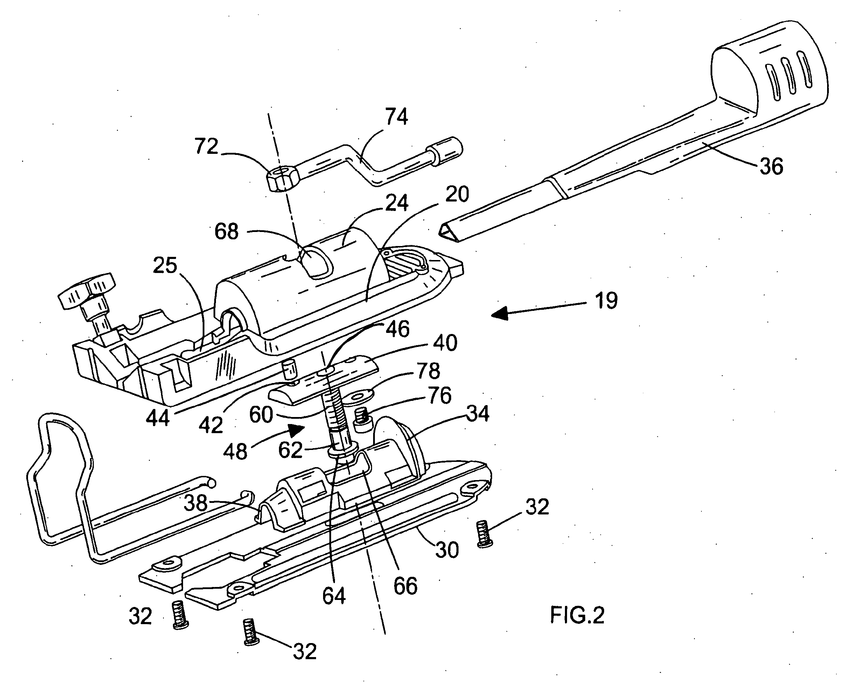

A shoe assembly 19 includes a metal cast 20 pivotable about an axis 22 generally parallel to a cutting plane of the jigsaw 2. A raised portion 24 of cast 20 abuts the underside of the housing 4 such that the housing 4 is supported on the shoe assembly 19. An aperture 25 (Figure 2) is formed in the cast 20 below blade clamp 16 in order to allow the jigsaw blade to pass through the cast 20. A guard rail 26 is attached to the front end of cast 20. The guard rail prevents objects from coming into contact with the blade (not shown). A lever 74 also projects from the housing 4, the purpose of which will be described in more detail below.

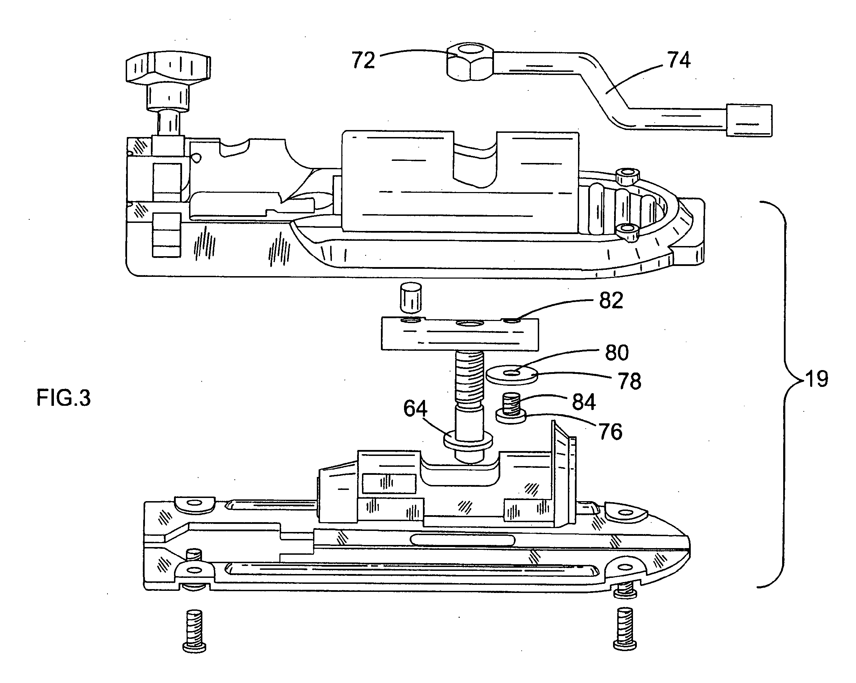

Referring to Figures 2 to 4, a sole plate 30 is adapted to be attached to the cast 20 by screws 32. Located between the sole plate 30 and the cast 20 is an adaptor 34 for receiving a suction pipe 36. The suction pipe 36 passes through the rear of raised portion 24, into adaptor 34 and is able to suck dust through the front end of adaptor 38. A clamp plate 40 is also located between sole plate 30 and cast 20, the clamp plate 40 having a first aperture 42 for holding ball bearing housing 44. The clamp plate 40 also has a cylindrical bore 46 to allow bolt 48 to pass through.

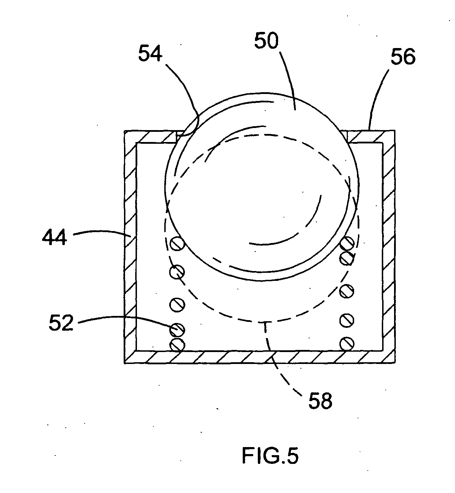

Referring to Figure 5, a ball bearing 50 is held in ball bearing housing 44, and mounted on top of a coil spring 52. A circular aperture 54 is formed in the upper surface 56 of ball bearing housing 44. The radius of circular aperture 54 is less than that of the radius of the ball bearing 50, so that the ball bearing cannot pass through aperture 54 but can project through the aperture to a limited extent as shown by the solid line in Figure 5. The ball bearing 50 can also be depressed against coil spring 52 to be positioned shown by broken line 58 such that the ball bearing does not project beyond the upper surface 56 of ball bearing housing 44.

Referring to Figures 2 to 4, the ball bearing housing fits inside aperture 42 formed in the top of clamp plate 40. Bolt 48 comprises a threaded portion 60, a smooth portion 62 and a flange section 64. Adaptor 34 has an opening 66 having a width less than the diameter of flange 64, such that flange 64 abuts against the edges of the underside of opening 66. The smooth section 62 of the bolt 48 rests in cylindrical bore 46 of the clamp plate 40 such that the adaptor 34 is supported by the bolt 48 and clamp plate 40 is mounted on top of adaptor 34. The threaded portion 60 of the bolt passes through opening 68 formed in the raised portion 24 of the cast 20.

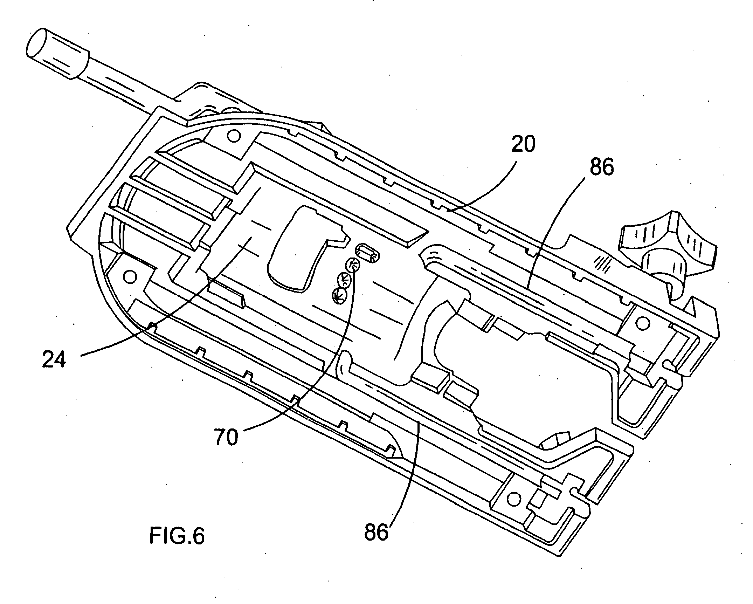

Referring to Figure 6, a plurality of indentations 70 are formed in the underside of raised portion 24 of the cast 20. The upper surface of clamp plate 40 has an arcuate shape to allow it to slidably engage the underside of raised portion 24, and ball bearing 50 projects from ball bearing housing 44 and clamp plate 40, under the force of compression spring 52, such that the ball bearing 50 is pushed into one of the indentations 70.

The method of pivoting the shoe assembly 19 relative to housing 4 will now be described with reference to Figures 2 to 6.

A nut 72 held in housing 4 has an inner screw thread (not shown) adapted to receive screw thread 60 of bolt 48. The nut 72 has a lever 74 extending from it, and rotation of the lever raises or lowers bolt 48 depending on the direction in which lever 74 is turned. Flange section 64 of bolt 48 abuts the underside of the edges of opening 66 of the adaptor 34, and pushes clamp plate 40 into sliding engagement with the underside of raised portion 24 of the cast 20. This causes ball bearing 50 to be held in one of the indentations 70, thus holding the shoe at a predetermined angle relative to the housing 4.

In order to change the angle of the shoe assembly 19 relative to the housing 4, and thus the angle of blade 18 relative to a workpiece, lever 74 is rotated in order to lower the adaptor 34 and clamp plate 40 away from the underside of raised portion 24 of cast 20. This allows compression spring 52 to extend, and ball bearing 50 to project through aperture 54. The cast 20 can then be pivoted relative to the housing 4. It will be understood that as adaptor 34 is connected to housing 4 via bolt 48,the adaptor 34 moves inside of raised portion 24 with the housing 4. During the pivoting motion, the ball bearing 50 rolls in and out of indentations 70 under the influence of coil spring 52 until the user selects the desired angular orientation of the shoe assembly 19. Lever 74 can then be moved in the opposite direction, causing bolt 48 to move upwardly due to the engagement of the screw thread of the nut with the screw thread 60 of the bolt, raising clamp plate 40 into a tight engagement with the underside of raised portion 24, locking the shoe assembly 19 in place.

When the shoe assembly 19 is set at the desired angle, a further locking mechanism comprising a second bolt 76 and a washer 78 is provided to prevent lever 74 being accidentally rotated to loosen the assembly. Second bolt 76 is held in the circular aperture 80 of washer 78. Clamp plate 40 has a second bore 82 having an internal screw thread adapted to engage the threaded portion 84 of second bolt 76. Referring to Figure 4, the washer 78 abuts the underside of flange 64 of the first bolt 48. When second bolt 84 is screwed tightly into clamp plate 82, the flange 64 of the first bolt is trapped between washer 78 and the underside of clamp plate 40. As a result of this, the first bolt 48 cannot be raised or lowered, therefore holding lever 74 in place and fixing the shoe assembly 19 at a set angle relative to the housing 4.

In order to unlock first bolt 48, the second bolt can be accessed by the user from the underside of the cast 20 and loosened, thus moving washer 78 away from the underside of clamp plate 40 and creating a limited space in which flange 64 can move up and down.

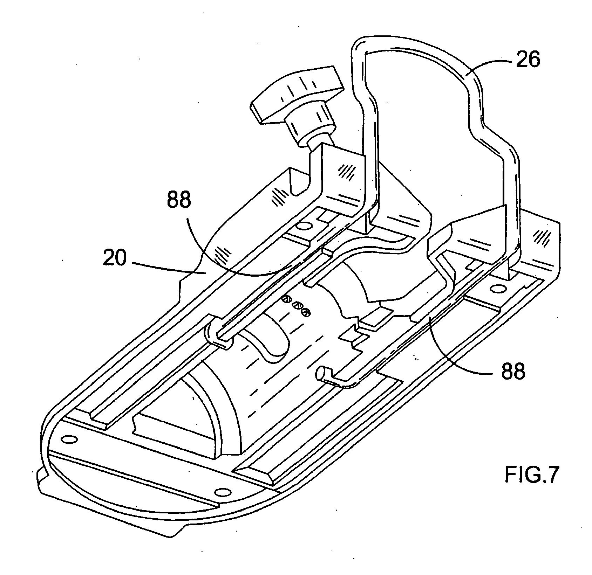

Referring to Figures 6 and 7, a groove 86 is formed along each side of the underside of cast 20. A guardrail 26 is formed from a single piece of steel, bent to form two legs 88 such that the legs 88 are received in groove 86. By mounting the guard rail in this way, the legs 88 provide reinforcement to the cast 20.

It will be appreciated by persons skilled in the art that the above embodiment has been described by way of example only and not in any limitative sense, and that various alterations and modifications are possible without departure from the scope of the invention as defined by the appended claims. For example, more than one resiliently biased ball bearing 50 may be provided, and the shoe assembly 19 may be held in the desired orientation relative to housing 4 solely by means of resilient engagement of a ball bearing 50 with an indentation 70, i.e. without the use of the second bolt 76 and washer 78.

## Claims

1. A shoe assembly (19) for a power tool having a housing (4), at least one working member for engaging a workpiece, and a motor for causing movement of the or each said working member relative to the housing, the shoe assembly comprising:-
a shoe portion (20, 30) adapted to engage a workpiece and having a plurality of recesses (70) provided on a surface thereof facing away from the housing of the tool in use; and
a mounting portion for mounting the shoe portion to the housing of the tool, the mounting portion having at least one resiliently displaceable projection adapted to engage said recesses to selectively releasably hold the shoe portion in one of a plurality of predetermined orientations relative to the mounting portion;
**characterised in that** the surface is positioned to face the workpiece in use when the underside of the shoe assembly is parallel with said workpiece.

2. An assembly according to claim 1, wherein at least one said resiliently displaceable projection comprises a respective spring-loaded ball bearing (50).

3. An assembly according to claim 2, wherein the mounting portion further comprises at least one clamp plate (40) for supporting a respective said spring-loaded ball bearing, at least one said clamp plate having a respective arcuate upper surface adapted to slidably engage the shoe portion such that at least one corresponding said ball bearing can selectively resiliently engage each of the plurality of said recesses of the shoe portion in response to a user pivoting said housing relative to said shoe member.

4. An assembly according to any one of the preceding claims, further comprising first locking means adapted to lock said shoe portion in a predetermined orientation relative to the mounting portion.

5. An assembly according to claims 3 and 4, wherein said first locking means comprises at least one first bolt (48) adapted to lock at least one said clamp plate to the shoe portion.

6. An assembly according to claim 5, wherein rotation of at least one said first bolt in a first sense causes at least one corresponding said clamp plate to disengage from the surface of said shoe potion, and rotation in the opposite sense causes at least one corresponding said clamp plate to engage the surface of said shoe portion in order to lock the clamp plate to the shoe portion.

7. An assembly according to claim 5 or 6, wherein said first locking means further comprises at least one nut (72) rotatably mounted to said housing and adapted to receive at least one respective said first bolt.

8. An assembly according to claim 7, wherein at least one said nut comprises a respective lever (74) for rotation of said nut relative to said housing.

9. An assembly according to any one of claims 5 to 8, further comprising second locking means adapted to prevent rotation of at least one said first bolt relative to a said clamp plate engaged by said bolt.

10. An assembly according to claim 9, wherein said second locking means comprises at least one second bolt (76) and at least one washer (78), at least one said second bolt received in at least one said clamp plate such that in a first position, at least one said washer abuts a said first bolt and prevents rotation of said first bolt, and such that in a second position rotation of the first bolt is permitted.

11. A reciprocating tool having a body, a rotary output shaft, a reciprocating member for causing a working member to execute reciprocating motion in response to rotation of said rotary output shaft, and a shoe assembly according to any one of the preceding claims.

12. A tool according to claim 11, further comprising dust extraction means adapted to remove dust produced by the action of said working member on a workpiece.

13. A tool according to claim 12, wherein said dust extraction means comprises a tube (36) projecting from said shoe portion adapted to be connected to a source of suction.

14. A tool according to any one of claims 11 to 13, wherein the tool is a jigsaw (2).

## Patentansprüche

1. Fußplattenvorrichtung (19) für ein angetriebenes Werkzeug mit einem Gehäuse (4), wenigstens einem Arbeitselement zum Eingriff mit einem Werkstück und einem Motor zum Veranlassen einer Bewegung des oder aller Arbeitselemente relativ zu dem Gehäuse, umfassend:
einen Fußplattenabschnitt (20, 30), der angepasst ist, mit einem Werkstück einzugreifen, und der eine Vielzahl von Aussparungen (70) aufweist, die an einer Fläche davon angeordnet sind, die bei der Verwendung von dem Gehäuse des Werkzeugs weg weist, und
einen Befestigungsabschnitt zum Befestigen des Fußplattenabschnitts an dem Gehäuse des Werkzeugs, wobei der Befestigungsabschnitt wenigstens einen elastisch verlagerbaren Vorsprung aufweist, der angepasst ist, mit den Aussparungen einzugreifen, um wahlweise lösbar den Fußplattenabschnitt in einer aus einer Vielzahl von vorgegebenen Ausrichtungen relativ zu dem Befestigungsabschnitt zu halten,
**dadurch gekennzeichnet, dass** die Fläche derart angeordnet ist, um dem Werkstück bei der Verwendung gegenüberzuliegen, wenn die Unterseite der Fußplattenvorrichtung parallel zu dem Werkstück liegt.

2. Vorrichtung nach Anspruch 1, wobei wenigstens einer der elastisch verlagerbaren Vorsprünge jeweils ein federvorgespanntes Kugellager (50) aufweist.

3. Vorrichtung nach Anspruch 2, wobei der Befestigungsabschnitt ferner wenigstens eine Klemmplatte (40) zum Halten eines entsprechenden federvorgespannten Kugellagers aufweist, wobei die wenigstens eine Klemmplatte eine entsprechend gekrümmte obere Fläche aufweist, die angepasst ist, um verschiebbar mit dem Fußplattenabschnitt einzugreifen, so dass wenigstens ein entsprechendes der Kugellager wahlweise elastisch mit jedem aus der Vielzahl der Aussparungen des Fußplattenabschnitts in Reaktion auf einen Benutzer eingreifen kann, der das Gehäuse relativ zu dem Fußplattenelement verschwenkt.

4. Vorrichtung nach einem der vorhergehenden Ansprüche, ferner mit einem ersten Verriegelungsmittel, das angepasst ist, den Fußplattenabschnitt in einer vorgegebenen Ausrichtung relativ zu dem Befestigungsabschnitt zu verriegeln.

5. Vorrichtung nach Anspruch 3 und 4, wobei das erste Verriegelungsmittel zumindest einen ersten Bolzen (48) aufweist, der angepasst ist, die wenigstens eine Klemmplatte mit dem Fußplattenabschnitt zu verriegeln.

6. Vorrichtung nach Anspruch 5, wobei eine Drehung des wenigstens einen ersten Bolzens in einem ersten Drehsinn die wenigstens eine entsprechende erste Klemmplatte veranlasst, sich von der Fläche des Fußplattenabschnitts zu lösen, und eine Drehung in dem entgegengesetzten Drehsinn die wenigstens eine entsprechende Klemmplatte veranlasst, mit der Fläche des Fußplattenabschnitts einzugreifen, um die Klemmplatte mit dem Fußplattenabschnitt zu verriegeln.

7. Vorrichtung nach Anspruch 5 oder 6, wobei das erste Verriegelungsmittel ferner wenigstens eine Mutter (72) umfasst, die drehbar an dem Gehäuse angebracht ist und angepasst ist, zumindest einen entsprechenden ersten Bolzen aufzunehmen.

8. Vorrichtung nach Anspruch 7, wobei die wenigstens eine Mutter einen entsprechenden Hebel (74) zum Drehen der Mutter relativ zu dem Gehäuse aufweist.

9. Vorrichtung nach einem der Ansprüche 5 bis 8, ferner mit einem zweiten Verriegelungsmittel, das angepasst ist, eine Drehung des wenigstens einen Bolzens relativ zu einer der Klemmplatten, die mit dem Bolzen eingreift, zu verhindern.

10. Vorrichtung nach Anspruch 9, wobei das zweite Verriegelungsmittel wenigstens einen zweiten Bolzen (76) und wenigstens eine Scheibe (78) umfasst, wobei der wenigstens eine zweite Bolzen in der wenigstens einen Klemmplatte aufgenommen ist, so dass in einer ersten Stellung die wenigstens eine Scheibe an dem ersten Bolzen anliegt und eine Drehung des ersten Bolzens verhindert und so dass in einer zweiten Stellung eine Drehung des ersten Bolzens ermöglicht wird.

11. Werkzeug mit sich hin und her bewegendem Arbeitselement mit einem Körper, einer rotierenden Ausgangswelle, einem sich hin und her bewegenden Element zum Veranlassen eines Arbeitselements, eine hin und hergehende Bewegung in Reaktion auf eine Drehung der rotierenden Ausgangswelle auszuführen, und einer Fußplattenvorrichtung nach einem der vorhergehenden Ansprüche.

12. Werkzeug nach Anspruch 11, ferner mit einer Staubabsaugeinrichtung, die angepasst ist, Staub, der durch die Wirkung des Arbeitselements an einem Werkstück erzeugt wird, zu entfernen.

13. Werkzeug nach Anspruch 12, wobei die Staubabsaugeinrichtung ein Rohr (36) aufweist, das sich von dem Fußplattenabschnitt erstreckt und angepasst ist, mit einer Unterdruckquelle verbunden zu werden.

14. Werkzeug nach einem der Ansprüche 11 bis 13, wobei das Werkzeug eine Stichsäge (2) ist.

## Revendications

1. Ensemble de patin (19) pour un outil motorisé ayant un boîtier (4), au moins un élément de travail pour mettre en prise une pièce, et un moteur pour provoquer le mouvement du ou de chacun desdits éléments de travail par rapport au boîtier, l'ensemble de patin comprenant :
◆ une partie de patin (20, 30) adaptée pour mettre en prise une pièce et ayant une pluralité d'évidements (70) prévus sur sa surface faisant face au boîtier de l'outil, à l'usage ; et
◆ une partie de montage pour monter la partie de patin sur le boîtier de l'outil, la partie de montage ayant au moins une saillie déplaçable de manière élastique adaptée pour mettre en prise lesdits évidements afin de maintenir de manière sélectivement amovible la partie de patin dans l'une d'une pluralité d'orientations prédéterminées par rapport à la partie de montage ;
**caractérisé en ce que** la surface est positionnée pour faire face à la pièce à l'usage, lorsque la face inférieure de l'ensemble de patin est parallèle à ladite pièce.

2. Ensemble selon la revendication 1, dans lequel au moins l'une desdites saillies déplaçables de manière élastique comprend un roulement à billes (50) à ressort respectif.

3. Ensemble selon la revendication 2, dans lequel la partie de montage comprend en outre au moins une plaque de serrage (40) pour supporter ledit roulement à billes à ressort respectif, au moins ladite plaque de serrage ayant une surface supérieure arquée respective adaptée pour mettre en prise de manière coulissante la partie de patin de sorte que ledit au moins un roulement à billes correspondant peut mettre en prise de manière sélectivement élastique chacun de la pluralité desdits évidements de la partie de patin en réponse à un utilisateur qui fait pivoter ledit boîtier par rapport audit élément de patin.

4. Ensemble selon l'une quelconque des revendications précédentes, comprenant en outre des premiers moyens de blocage adaptés pour bloquer ladite partie de patin dans une orientation prédéterminée par rapport à la partie de montage.

5. Ensemble selon les revendications 3 et 4, dans lequel lesdits premiers moyens de blocage comprennent au moins un premier boulon (48) adapté pour bloquer ladite au moins une plaque de serrage sur la partie de patin.

6. Ensemble selon la revendication 5, dans lequel la rotation dudit moins un premier boulon dans un premier sens, amène ladite au moins une plaque de serrage correspondante à se dégager de la surface de ladite partie de patin, et la rotation dans le sens opposé amène ladite au moins une plaque de serrage correspondante à mettre en prise la surface de ladite partie de patin afin de bloquer la plaque de serrage sur la partie de patin.

7. Ensemble selon la revendication 5 ou 6, dans lequel les premiers moyens de blocage comprennent en outre au moins un écrou (72) monté de manière rotative sur ledit boîtier et adapté pour recevoir ledit au moins un premier boulon respectif.

8. Ensemble selon la revendication 7, dans lequel ledit au moins un écrou comprend un levier (74) respectif pour la rotation dudit écrou par rapport audit boîtier.

9. Ensemble selon l'une quelconque des revendications 5 à 8, comprenant en outre des seconds moyens de blocage adaptés pour empêcher la rotation dudit au moins un premier boulon par rapport à ladite plaque de serrage mise en prise par ledit boulon.

10. Ensemble selon la revendication 9, dans lequel lesdits seconds moyens de blocage comprennent au moins un second boulon (76) et au moins une rondelle (78), ledit au moins un second boulon est reçu dans ladite au moins une plaque de serrage de sorte que dans une première position, ladite au moins une rondelle vient en butée contre ledit premier boulon et empêche la rotation dudit premier boulon, et de sorte que dans une seconde position, la rotation dudit premier boulon est autorisée.

11. Outil effectuant un mouvement de va-et-vient ayant un corps, un arbre de sortie rotatif, un élément effectuant un mouvement de va-et-vient pour amener un élément de travail à réaliser un mouvement de va-et-vient en réponse à la rotation dudit arbre de sortie rotatif, et un ensemble de patin selon l'une quelconque des revendications précédentes.

12. Outil selon la revendication 11, comprenant en outre des moyens d'extraction de poussière adaptés pour retirer la poussière produite par l'action dudit élément de travail sur une pièce.

13. Outil selon la revendication 12, dans lequel lesdits moyens d'extraction de poussière comprennent un tube (36) faisant saillie de ladite partie de patin adaptée pour être raccordée à une source d'aspiration.

14. Outil selon l'une quelconque des revendications 11 à 13, dans lequel l'outil est une scie sauteuse (2).
